# EUROPEAN PATENT SPECIFICATION

(11) **EP 4 019 246 B1**
(45) Date of publication and mention of the grant of the patent: **21.05.2025**
(21) Application number: 21207168.2
(22) Date of filing: 09.11.2021
(51) Int. Cl.: B32B 27/08, B32B 7/02, B32B 7/12, B32B 27/30, B32B 27/32, B65D 65/40

(54) **MULTILAYER POLYMER BARRIER FILM FOR FOOD PACKAGING**
MEHRSCHICHTIGE POLYMERBARRIEREFOLIE FÜR LEBENSMITTELVERPACKUNGEN
FILM BARRIÈRE POLYMÈRE MULTICOUCHE POUR LE CONDITIONNEMENT D'ALIMENTS

(30) Priority: 24.12.2020 NL 2027218
(43) Date of publication of application: 29.06.2022
(73) Proprietor: Oerlemans Packaging B.V., 4265 GB Genderen (NL)
(72) Inventor: Verschaeren, Patrick Corneel Mathilde, Genderen (NL); Hanegraaf, Joan Antonius Adrianus Maria, Genderen (NL); Van Huijstee, Marcus Koen Joannes Maria, Genderen (NL)
(74) Representative: Arnold & Siedsma

(56) References cited:
- CN-A- 111 169 131
- US-A1- 2007 149 678
- US-A1- 2008 178 768
- US-A1- 2018 170 017
- US-A1- 2019 016 100

## Description

The present invention relates to a multilayer polymer barrier film or polymer barrier laminate for food packaging providing a gas and water vapor barrier and the use of the multilayer polymer barrier film or polymer barrier laminate for packaging of foodstuff, medicine or cosmetics. The present invention further relates to a method for producing a recyclable barrier film comprised of the multilayer polymer barrier film and food packaging barrier film comprised of the multilayer polymer barrier film.

Barrier films are plastic films used in the food industry as a barrier against oxygen, water, steam, CO2 and aromas. Barrier films make an important contribution by reducing food losses and enabling hygienic packaging. Many plastics may be used as a polymer film for packaging, depending on the permeability of the material to gases and water vapor. The often used materials for barrier films such as polyethylene (PE), polypropylene (PP) form a good barrier to water vapor and can thus help prevent products from drying out or that dry products become humid. However, the gas permeability of these materials is too high, resulting in that a gas mixture or vacuum is not maintained long enough for most products to achieve the desired shelf life. Materials such as polyester (PET), nylon (PA), are barrier plastics that are often suitable for retaining gasses used during packaging to modify the atmosphere in food packaging, but not for retaining water vapor.

Several materials can be combined to improve the shelf life of food products. Materials can also be used for various applications, as a barrier to gas, but also as a seal layer and / or for structural strength. For packaging of food product that requires a long shelf life, a two barrier polymer film is essential that provides a gas- and water vapor barrier. Often polymer films are combined with metalloid or inorganic materials, such as aluminum foil to achieve an optimal barrier for both a gas and water vapor. To maintain flex barrier properties of the barrier film, the focus has been on using metalized layer lamination, coating and/or inorganic particle addition in multilayer structures. Food barrier structures often include components such as polyvinylidene chloride coating, metalized films, or additives such as aluminum and silicon oxides.

Traditionally a multilayer laminate film is used, for example comprised of polyethylene and aluminum for the packaging of food product such as coffee, powders and liquids. At present in food packaging such a two folded barrier is provided by polyethylene film being coated or laminated with a layer of aluminum. However, the downside of these polymer films is that the aluminum comprising polyethylene film is unsuitable to be recycled in a polyethylene waste stream, simply due to the fact that it does not melt under extrusion conditions of approximately 200°C wherein the polyethylene stream is processed for recycling purposes. Additional steps are needed to remove the aluminum layer or coating from the polyethylene.

US20180170017A1 discloses a multilayer packaging film with high barrier properties, especially to oxygen transmission, exhibiting Oxygen Transmission Rate (OTR) lower than 0.01 cc/m²/24h. The packeging film is comprising two outer support layers of oriented PP and two inner layers of ethylene vinyl alcohol (EVOH) comprising a vacuum deposition coating of aluminum or silicon oxide.

US20070149678A1 discloses a polymer nanocomposite including silica or non-platelet metal oxide particles and the use of these nanocomposites in the core layer of a multilayer barrier film comprises of three polymeric layers alternating with two EVOH layer whereby all layers are bonded via a tie. The film has high barrier properties and low gas permeation properties.

CN111169131A discloses food packaging films, a one-time blown film forming sheet of 200 to 400 µm, comprising HDPE or LLDPE outer layers sandwiching an EVOH layer via tie layers. The film has good barrier properties and is low cost in production.

US20080178768A1 discloses a machine direction oriented multilayer PE film that has Water Vapor Transmission Rate (WVTR) of less than 2.5 g-mil/m²-day and an OTR of less than 1.5 cm²-mil/m²-day. The multilayer film contains at least five layers comprising LLDPE, HDPE, EVOH or derivatives thereof.

US20190016100A1 discloses a polymer barrier film having a thickness of 300 to 460 µm, comprised of an ethylene co-polymer and EVOH layer that can be used for packaging of cosmetics. The barrier film provides for preservation of contents and a flavor barrier property to the packaged products.

Currently barrier films containing metal foil dominate the barrier film packaging market. The metal comprising barrier films are the most used type of film in food packaging due to their low cost and excellent gas and water vapor barrier performance. However, these films are brittle and prone to tear. Furthermore, for example aluminum foils are not transparent to enable the consumer to see their food/content, cannot be used as packaging for food in microwave applications, and the foils are not sustainable and very hard to recycle. The recyclability of present barrier films remains a challenge for the raw material manufacturers and producers, without adversely affecting the barrier properties or the flexibility and durability of the barrier film.

Global demand and usage of barrier films as packaging material is growing, while at the same time the demands on performance features and sustainability of the packaging solution are also increasing. Despite the dominance of the foil films which provide excellent barrier performance at low cost, there are currently no clear polymer film that can offer the gas and water vapor barrier performance of a foil, in a low carbon footprint, low cost solution. Considering the above, there is a need in the art for alternative packaging solutions that maintain barrier performance, that are suitable for microwave use, are transparent enough to view the packaged contents inside, and offer sustainability and a lower carbon footprint, i.e. a barrier film that provides optimal barrier properties for food packaging and that is easy to recycle at low cost.

It is an object of the present invention, amongst other objects, to address the above need in the art. The object of present invention, amongst other objects, is met by the present invention as outlined in the appended claims.

Specifically, the above object, amongst other objects, is met, according to a first aspect, by a multilayer polymer barrier film for food packaging providing a gas and water vapor barrier according to claim 1.
The barrier films of present invention do not contain any metal or inorganic materials. Since the barrier films contain more than 5% EVOH, in order to make these barrier films recyclable in the PE film stream a compatibiliser may be used in the recycling process, which ensures that the EVOH and PE or PP become mixable and become fully recyclable.

The multilayer polymer barrier film of present invention has an Oxygen Transmission Rate (OTR) of at most 0.5 cc/m²/24h, preferably at most 0.25 cc/m²/24h more preferably at most 0.1 cc/m²/24h, as determined according to ASTM E398 and has a Water Vapor Transmission Rate (WVTR) of at most 3.8 g/m2/24h, preferably at most 1.0 g/m²/24h, more preferably 0.1 g/m²/24h, as determined according to ASTM D3985. The barrier properties of packaging material are essential in preserving foodstuffs. These properties are determined by the transmission rate of a gas through a material. The gases that most affect the shelf life of packaged products are oxygen and water vapor. The permeability tests are performed by measuring the Oxygen Transmission Rate (OTR) and the Water Vapor Transmission Rate (WVTR) of the film to determine the barrier properties, in addition the test for the durability, rigidness and flexibility of the barrier film material that must be suitable for packaging of foodstuff. The OTR and WVTR values of aluminum foil are most optimal and desired for food packaging, i.e. around 0.1 cc/m2/24h and 0.1 g/m2/24h respectively, however these values are hard to achieve by a packaging material that consists of a polymer material.

The water vapor barrier is formed by the PP or PE layers of the multilayer barrier film of present invention. To increase the impact resistance and torsion resistance of the barrier film the film comprises at least two layers of Ethylene Vinyl Alcohol (EVOH). EVOH is a brittle material and using EVOH as two or more layers in the barrier film increases the toughness of the packaging material and reduces the risk of leakage of the EVOH layers. Furthermore, EVOH has material properties that are the closest to matching the oxygen and flavor aroma barrier, clarity and cost parameters desired by an optimal barrier film. However, flex barrier properties of an EVOH barrier film on itself are poor due to the brittle nature of EVOH. Therefore in the barrier film of present invention at least two EVOH layers are combined with polyethylene layers to improve the barrier function of the packaging material as a whole and at the same time have an improved flex barrier property and durability in comparison to the known alternative packaging solution in foil comprising metal such as aluminum.

The multilayer polymer barrier film is produced via co-extrusion. Co-extrusion provides solutions to meet the barrier film functionality of a food packaging film, such as the gas and vapor barrier properties, durability (tensile properties, impact resistance), thickness and sealability of the film. Two or more polymer films are co-extruded and joined together to form a single structure with multiple layers. This allows combining the desirable properties of multiple polymers into one structure with enhanced performance characteristics. The multilayer barrier films of present invention improve the recyclability due to the use of polymer only as materials (i.e., no use of inorganic or metallic materials). Furthermore, there is no need for additional layers of processing steps to obtain a barrier film having the required gas and water vapor barrier properties, such as an extra coating or chemical deposition. The barrier film of present invention is fully transparent, disclosing the content of the food in case being used as packaging material for foodstuff, and can be used in the microwave.

According to a preferred embodiment, the present invention relates to the multilayer polymer barrier film, wherein the at least four layers that encapsulate said EVOH layers are of high density polyethylene (HDPE) and/or Linear Low Density Polyethylene (LLDPE). HDPE and LLDPE are thermoplastic polymers and can therefore both be welded, for example, using hot air or gas, welding extruders, and welding machines. HDPE and LLDPE are produced at low pressure. This keeps the molecules intact as much as possible and the ethylene keeps its hardness, is more rigid, resulting in long polymer chains providing the durability and flex to the barrier film.

The present invention relates to the multilayer polymer barrier film, wherein the multilayer polymer barrier film further comprises at least six layers of adhesive polymers selected from the group consisting of maleic anhydride (MAH)-grafted PE polymers, ethylene acrylic acid (EAA), ethylene methacrylic acid (EMAA), EMA (ethyl methacrylate), ethylene vinyl acetate (EVA), or blends thereof with LLDPE, preferably maleic anhydride (MAH)-grafted PE polymers, more preferably maleic anhydride (MAH)-grafted LLDPE, for providing adhesion between the inner layers of EVOH and layers of PE or PP that encapsulate said EVOH layers. To construct multilayer films, adhesive polymers or functional polymers are used to provide adhesion to other polymers such as EVOH or polyamide barrier layers in an extrusion process. Acid copolymers such as blends thereof with LLDPE, preferably blends of LLDPE and maleic anhydride (MAH) are suitable. These adhesives provide a strong and reliable grafting and bond to other substrates, i.e. EVOH, PP and PE layers in coextrusion processes of the multilayer barrier film of present invention.

According to yet another preferred embodiment, the present invention relates to the multilayer polymer barrier film, wherein the layers of adhesive polymers alternate with the PE, PP and EVOH layers in a multilayer construction of the multilayer polymer barrier film. Between each of the PE or PP or EVOH layers an adhesive layer is present to ensure proper construction of the multilayer film for enhanced durability and optimal gas and water vapor barrier functionality.

The present invention relates to the multilayer polymer barrier film, wherein the multilayer barrier film is comprised of between 45 to 65 wt%, preferably 50 to 60 wt% of PE and/or PP, 20 to 40 wt%, more preferably 25 to 35 wt% of adhesive polymers, and 7.5 to 20 wt%, more preferably 10 to 15 wt% of EVOH, based on the total weight of the film. Disclosed herein is a multilayer polymer barrier film that comprises two layers of EVOH (7.5 wt% and 7.5 wt%), one outer layer of LLDPE (25 wt%), one outer layer of HDPE (30%), including three maleic anhydride (MAH)-grafted PE polymer layers (10 wt% each) as adhesive polymer layer between each EVOH and/or LLDPE, HDPE layer to form a seven layer barrier film.

The present invention relates to the multilayer polymer barrier film, wherein the multilayer barrier film is comprised of at least four layers of EVOH, at least six layers of adhesive polymers and at least four layers of PP or PE. Results show that at least four layers of EVOH provides the most optimal barrier film in terms gas- and water vapor permeability and in view of the costs to produce vast amounts of barrier films that ensure the food quality and shelf life. The multilayer barrier films are much more durable than aluminum foil; the multilayer film outperforms the aluminum foil in the Gelbo flex test not showing signs of breakage after 600 plus torsions. This is due to the at least four separate layers of EVOH present in the multi-layered structure of the barrier film.

According to yet another preferred embodiment, the present invention relates to the multilayer polymer barrier film, wherein the barrier film has a total thickness of 15 to 200 µm, preferably 40 to 125 µm, more preferably 50 to 100 µm. In case the barrier films have a thickness of more than 200 microns, the films becomes too stiff in order to run smoothly on a packaging line.

According to another preferred embodiment, the present invention relates to the multilayer polymer barrier film, wherein the barrier film does not comprise metal and/or inorganic compounds. Because the barrier film is only comprised of polymers, in contrast to the bulk of barrier films currently used which contain aluminum, the film material can be recycled in an easy and cost effective manner in the PE stream. There is no need for further pre-processing steps to remove, metals, inorganic materials or other contaminants from the polymer stream before recycling process can take place.

Disclosed herein is a multilayer polymer barrier film, wherein the film is of 100% recyclable polymer. The multilayer barrier film is of 100% recyclable polymer, providing a food packaging with a greener footprint than present barrier films on the market.

The present invention, according to a second aspect, relates to a polymer barrier laminate comprised of a machine direction oriented HDPE or PP layer that is laminated with a multilayer polymer barrier film of present invention. The tensile strength at break is greatly increased when linear low-density polyethylene (LLDPE) is oriented in the machine direction (MD). The multilayer polymer barrier film comprised the inner film layer of the packaging material being laminated against an oriented HDPE or PP foil, which in turn is a recyclable barrier laminate. Such a complex improves the water vapor barrier to the level of aluminum foil. According to a preferred embodiment, the present invention relates to the polymer barrier laminate comprised of a multilayer polymer barrier film of present invention, wherein said multilayer polymer barrier film has been oriented in machine direction and is laminated with PE of PP film. By orienting the above structure in MD, both the gas and water vapor barriers are further improved. In this case the MD oriented polymer barrier film of present invention can be laminated as an outer foil with a PE or PP welding foil. The properties are increased when the multilayer barrier film itself is being oriented and laminated with HDPE or PP. Furthermore, the EVOH, PE and PP layers of the multilayer barrier film of present invention may be oriented in MD. The properties are even more increased by two- to threefold when the multilayer barrier film of the present invention itself is being oriented and laminated with HDPE or PP. Oriented EVOH has 2-3 times improves gas barrier properties and oriented HDPE or PP has 2-3 times improved water vapor barrier properties as compared to the non-oriented barrier film. In this case the OTR and WVTR are close to the values of aluminum foil itself, i.e. around 0.1 cc/m²/24h and 0.1 g/m²/24h respectively.

The present invention, according to a further aspect, relates to a method for producing a recyclable barrier film according to claim 6.

The multilayer barrier film of present invention produced according to this method is comprised of between 45 to 65 wt%, preferably 50 to 60 wt% of PE and/or PP, 20 to 40 wt%, more preferably 25 to 35 wt% of adhesive polymers, and 7,5 to 20 wt%, more preferably 10 to 15 wt% of EVOH, based on the total weight of the film.

According to another preferred embodiment, the present invention relates to the method, wherein after co-extrusion and joining of multiple polymer films to form a single barrier film structure said multilayer polymer barrier film is oriented in machine direction. By stretching the polymer melt in machine direction, i.e. drawn upwards with for example rollers thereby stretching the polymer melt in machine direction. By orienting the above structure in MD, both the gas and water vapor barriers are improved by two- to threefold in comparison to the non oriented multilayer barrier film.

According to a preferred embodiment, the present invention relates to the method, wherein the melting is performed at 160 to 240 °C, preferably 180 to 220 °C, most preferably 195 to 205 °C, and/or wherein the melting is performed at a pressure of 200 to 500 bar, preferably 250 to 400 bar, more preferably 300 to 350 bar. At the indicated temperature and pressure the polymer mixture will become a homogenous mixture of the polymers having an optimal distribution providing optimal material properties of the resulting barrier film being produced. If the temperature and pressure are too low no optimal homogenous melt is achieved resulting in a film of inconsistent thickness and material properties throughout the material. If the temperature and pressure are too high, the polymer starts to degrade and oxidate and negatively affects the material properties, and furthermore the polymer melt will become too liquid to produce a barrier film.

The present invention, according to a further aspect, relates to a food packaging barrier film comprised of the multilayer polymer barrier film or polymer barrier laminate as indicated above.

The present invention, according to a further aspect, relates to the use of the multilayer polymer barrier film or polymer barrier laminate of present invention for packaging of foodstuff, medicine or cosmetics.

The present invention will be further detailed in the following examples.

### Example I

### Gas and water vapor permeability of multilayer barrier film

A barrier film according to present invention was tested in relation to their gas and water vapor barrier properties. The barrier film was comprised of four inner layers of ethylene vinyl alcohol (EVOH) and ten layers of polyethylene that encapsulate the four EVOH layers. The EVOH layers comprised more than 5 wt% of the total weight of the barrier polyethylene film. The barrier film was compared to aluminum foil, which is known to have a low gas and water vapor permeability.

The oxygen transmission rate (OTR) and the water vapor transmission rate (WVTR) are determined for the barrier film and the aluminum foil. The OTR is the steady state rate at which oxygen gas permeates through the film at standard test conditions of 23°C and 0% relative humidity (RH). Values are expressed in cc/m²/24hr. The OTR was determined according to ASTM E398 standard test method using Mocon Ox-Tran measuring equipment. The WVTR (also known as moisture vapor transmission rate) is a measure of the passage of water vapor through the film at standard test conditions of 38°C and 90% RH. The WVTR was determined according to ASTM D3985 standard test method using Mocon Permatran-W measuring equipment. Values are expressed in g/m²/24hr. Furthermore, the strength and flexing of the multilayer barrier film was tested and compared to aluminum foil in a Gelbo Flex test using a Gelbo flexing tester. Table 1 below shows the results of the OTR, WVTR and Gelbo Flex tests.

**Table 1. Test results on gas and water vapor permeability of the barrier film.**

| | **Multilayer Barrier Film** | **Alu foil** |
|---|---|---|
| OTR | 0.5 cc/m²/24h | 0.1 cc/m²/24h |
| WVTR | 3.8 g/m²/24h | 0.1 g/m²/24 |
| | | |
| # of flexing before break | >600 | <300 |

The barrier film of present invention has sufficient low gas permeability, close to the values of an aluminum foil. The water vapor barrier function of the barrier film of present invention is less than that of an aluminum foil, however is still sufficient for use in food packaging and to ensure shelf life and maintain proper taste and nutritional value. Furthermore, the multilayer barrier films are much more durable than aluminum foil; the multilayer film outperforms the aluminum foil in the Gelbo flex test not showing signs of breakage after 600 plus torsions. This is due to the at least four separate layers of EVOH present in the multi-layered structure of the barrier film.

The barrier properties in respect to the water vapor permeability of the film are improved if an oriented HDPE or PP foil is laminated with the multilayer barrier film of present invention. The properties are even more increased by two- to threefold when the multilayer barrier film of the present invention itself is being oriented and laminated with HDPE or PP. Oriented EVOH has 2-3 times improves gas barrier properties and oriented HDPE or PP has 2-3 times improved water vapor barrier properties as compared to the non-oriented barrier film. In this case the OTR and WVTR are close to the values of aluminum foil itself, i.e. around 0.1 cc/m²/24h and 0.1 g/m²/24.

## Claims

1. Multilayer polymer barrier film for food packaging providing a gas and water vapor barrier, wherein the film is comprised of thermoplastic polymers only and comprises at least four inner layers of ethylene vinyl alcohol (EVOH), and at least four layers of polyethylene (PE) or polypropylene (PP) that encapsulate said at least fourEVOH layers, wherein the film comprises at least 5wt% EVOH, based on the total weight of the film, wherein the multilayer polymer barrier film has an Oxygen Transmission Rate (OTR) of at most 0.5 cc/m²/24h, as determined according to ASTM D3985 and wherein the multilayer polymer barrier film has a Water Vapor Transmission Rate (WVTR) of at most 3.8 g/m2/24h, as determined according to ASTM E398, wherein the multilayer barrier film is comprised of between 45 to 65 wt% PE and/or PP, 20 to 40 wt % adhesive polymers, and 7.5 to 20 wt% EVOH, based on the total weight of the film, and wherein the multilayer polymer barrier film further comprises at least six layers of adhesive polymers selected from the group consisting of maleic anhydride (MAH)-grafted PE polymers, ethylene acrylic acid (EAA), ethylene methacrylic acid (EMAA), EMA (ethyl methacrylate), ethylene vinyl acetate (EVA), or blends thereof with LLDPE, preferably maleic anhydride (MAH)-grafted PE polymers, more preferably maleic anhydride (MAH)-grafted LLDPE, for providing adhesion between the at least four inner layers of EVOH and at least four layers of PP or PE that encapsulate said EVOH layers, and wherein the barrier film does not comprise metal and inorganic compounds.

2. Multilayer polymer barrier film according to claim 1, wherein the at least four layers that encapsulate said EVOH layers are of high density polyethylene (HDPE) and/or Linear Low Density Polyethylene (LLDPE).

3. Multilayer polymer barrier film according to claim 1 or 2, wherein the barrier film has a total thickness of 15 to 200 µm, preferably 40 to 125 µm, more preferably 50 to 100 µm.

4. Polymer barrier laminate comprised of a machine direction oriented HDPE or PP layer that is laminated with a multilayer polymer barrier film according to any of the claims 1 to 3.

5. Polymer barrier laminate comprised of a multilayer polymer barrier film according to any of the claims 1 to 3, wherein said multilayer polymer barrier film has been oriented in machine direction and is laminated with PE of PP film.

6. A method for producing a recyclable barrier film comprised of a multilayer polymer barrier film according to any of the claims 1 to 5, wherein the method comprises the steps of,
a) melting of polypropylene (PP) and/or polyethylene (PE) and ethylene vinyl alcohol (EVOH) polymers to obtain a homogenous polymer melt per polymer,
b) co-extrusion and joining of multiple polymer films to form a single barrier film structure with multiple layers of the polymer melt providing a recyclable multilayer barrier film, wherein the recyclable multilayer barrier film is comprised of at least four inner layers of ethylene vinyl alcohol (EVOH), and at least four layers of polyethylene (PE) or polypropylene (PP) encapsulating said EVOH layers, and at least six layers of adhesive polymers, preferably maleic anhydride (MAH)-grafted PE polymers, more preferably maleic anhydride (MAH)-grafted LLDPE, providing adhesion between the at least four inner layers of EVOH and at least four layers of PE or PP that encapsulate said EVOH layers,
c) cooling of the recyclable barrier film by air to below 100 °C.

7. Method for producing a recyclable barrier film according to claim 6, wherein the multilayer barrier film is comprised of between 45 to 65 wt%, preferably 50 to 60 wt% of PE and/or PP, 20 to 40 wt%, more preferably 25 to 35 wt% of adhesive polymers, and 7.5 to 20 wt%, more preferably 10 to 15 wt% of EVOH, based on the total weight of the film.

8. Method for producing a recyclable barrier film according to claim 6 or 7, wherein after co-extrusion and joining of multiple polymer films to form a single barrier film structure said multilayer polymer barrier film is oriented in machine direction.

9. Method for producing a recyclable barrier film according to any of the claims 6 to 8, wherein the melting is performed at 160 to 240 °C, preferably 180 to 220 °C, most preferably 195 to 205 °C, and/or wherein the melting is performed at a pressure of 200 to 500 bar, preferably 250 to 400 bar, more preferably 300 to 350 bar.

10. Food packaging barrier film comprised of the multilayer polymer barrier film or polymer barrier laminate according to any of the claims 1 to 5.

11. Use of the multilayer polymer barrier film or polymer barrier laminate according to any of the claims 1 to 5 for packaging of foodstuff, medicine or cosmetic.

## Patentansprüche

1. Mehrschichtige Polymerbarrierefolie für Lebensmittelverpackungen, die eine Gas- und Wasserdampfbarriere bereitstellen, wobei die Folie ausschließlich aus thermoplastischen Polymeren umfasst ist und mindestens vier innere Schichten aus Ethylenvinylalkohol (EVOH) und mindestens vier Schichten aus Polyethylen (PE) oder Polypropylen (PP) umfasst, die die mindestens vier EVOH-Schichten einkapseln, wobei die Folie mindestens zu 5 Gew.-% EVOH umfasst, basierend auf dem Gesamtgewicht der Folie, wobei die mehrschichtige Polymerbarrierefolie eine Sauerstofftransmissionsrate (OTR) von höchstens 0,5 cm³/m²/24h aufweist, wie gemäß ASTM D3985 bestimmt, und wobei die mehrschichtige Polymerbarrierefolie eine Wasserdampftransmissionsrate (WVTR) von höchstens 3,8 g/m2/24h aufweist, wie gemäß ASTM E398 bestimmt, wobei die mehrschichtige Barrierefolie aus zu 45 bis 65 Gew.-% PE und/oder PP, zu 20 bis 40 Gew.-% Klebepolymeren und zu 7,5 bis 20 Gew.-% EVOH umfasst ist, basierend auf dem Gesamtgewicht der Folie, und wobei die mehrschichtige Polymerbarrierefolie ferner mindestens sechs Schichten aus Klebepolymeren umfasst, die aus der Gruppe ausgewählt sind, bestehend aus Maleinsäureanhydrid (MAH)-gepfropften PE-Polymeren, Ethylenacrylsäure (EAA), Ethylenmethacrylsäure (EMAA), EMA (Ethylmethacrylat), Ethylenvinylacetat (EVA) oder Mischungen davon mit LLDPE, vorzugsweise Maleinsäureanhydrid (MAH)-gepfropften PE-Polymeren, mehr bevorzugt Maleinsäureanhydrid (MAH)-gepfropftem LLDPE, zum Bereitstellen einer Klebekraft zwischen den mindestens vier inneren Schichten aus EVOH und mindestens vier Schichten aus PP oder PE, die die EVOH-Schichten einkapseln, und wobei die Barrierefolie kein Metall und anorganische Verbindungen umfasst.

2. Mehrschichtige Polymerbarrierefolie nach Anspruch 1, wobei die mindestens vier Schichten, die die EVOH-Schichten einkapseln, aus Polyethylen hoher Dichte (HDPE) und/oder linearem Polyethylen niedriger Dichte (LLDPE) bestehen.

3. Mehrschichtige Polymerbarrierefolie nach Anspruch 1 oder 2, wobei die Barrierefolie eine Gesamtdicke von 15 bis 200 µm, vorzugsweise 40 bis 125 µm, mehr bevorzugt 50 bis 100 µm, aufweist.

4. Polymerbarrierelaminat, das aus einer in Maschinenrichtung orientierten HDPE- oder PP-Schicht umfasst ist, die mit einer mehrschichtigen Polymerbarrierefolie nach einem der Ansprüche 1 bis 3 laminiert ist.

5. Polymerbarrierelaminat, die aus einer mehrschichtigen Polymerbarrierefolie nach einem der Ansprüche 1 bis 3 umfasst ist, wobei die mehrschichtige Polymerbarrierefolie in Maschinenrichtung orientiert wurde und mit PE- oder PP-Folie laminiert ist.

6. Verfahren zum Produzieren einer recycelbaren Barrierefolie, die aus einer mehrschichtigen Polymerbarrierefolie nach einem der Ansprüche 1 bis 5 umfasst ist, wobei das Verfahren die Schritte umfasst,
a) Schmelzen von Polypropylen (PP) und/oder Polyethylen (PE) und Ethylenvinylalkohol (EVOH)-Polymeren, um pro Polymer eine homogene Polymerschmelze zu erhalten,
b) Coextrusion und Verbinden mehrerer Polymerfolien, um eine einzige Barrierefolienstruktur mit mehreren Schichten der Polymerschmelze auszubilden, die eine recycelbare mehrschichtige Barrierefolie bereitstellt, wobei die recycelbare mehrschichtige Barrierefolie aus mindestens vier inneren Schichten aus Ethylenvinylalkohol (EVOH) und mindestens vier Schichten aus Polyethylen (PE) oder Polypropylen (PP), die die EVOH-Schichten einkapseln, und mindestens sechs Schichten aus Klebepolymeren, vorzugsweise Maleinsäureanhydrid (MAH)-gepfropften PE-Polymeren, mehr bevorzugt Maleinsäureanhydrid (MAH)-gepfropftem LLDPE umfasst ist, die die Klebekraft zwischen den mindestens vier inneren Schichten aus EVOH und den mindestens vier Schichten aus PE oder PP bereitstellen, die die EVOH-Schichten einkapseln,
c) Abkühlen der recycelbaren Barrierefolie durch Luft auf unter 100 °C.

7. Verfahren zum Produzieren einer recycelbaren Barrierefolie nach Anspruch 6, wobei die mehrschichtige Barrierefolie aus zwischen zu 45 bis 65 Gew.-%, vorzugsweise zu 50 bis 60 Gew.-% PE und/oder PP, zu 20 bis 40 Gew.-%, mehr bevorzugt zu 25 bis 35 Gew.-% Klebepolymeren und zu 7,5 bis 20 Gew.-%, mehr bevorzugt zu 10 bis 15 Gew.-% EVOH umfasst ist, basierend auf dem Gesamtgewicht der Folie.

8. Verfahren zum Produzieren einer recycelbaren Barrierefolie nach Anspruch 6 oder 7, wobei nach der Coextrusion und dem Verbinden mehrerer Polymerfolien, um eine einzige Barrierefolienstruktur auszubilden, die mehrschichtige Polymerbarrierefolie in Maschinenrichtung orientiert wird.

9. Verfahren zum Produzieren einer recycelbaren Barrierefolie nach einem der Ansprüche 6 bis 8, wobei das Schmelzen bei 160 bis 240 °C, vorzugsweise 180 bis 220 °C, am meisten bevorzugt 195 bis 205 °C, durchgeführt wird und/oder wobei das Schmelzen bei einem Druck von 200 bis 500 bar, vorzugsweise 250 bis 400 bar, mehr bevorzugt 300 bis 350 bar, durchgeführt wird.

10. Barrierefolie für Lebensmittelverpackungen, die aus der mehrschichtigen Polymerbarrierefolie oder dem Polymerbarrierelaminat nach einem der Ansprüche 1 bis 5 umfasst ist.

11. Verwendung der mehrschichtigen Polymerbarrierefolie oder des Polymerbarrierelaminats nach einem der Ansprüche 1 bis 5 zum Verpacken von Nahrungsmitteln, Medikamenten oder Kosmetika.

## Revendications

1. Film barrière polymère multicouche destiné à un emballage alimentaire fournissant une barrière au gaz et à la vapeur d'eau, dans lequel le film est constitué de polymères thermoplastiques uniquement et comprend au moins quatre couches internes d'alcool éthylène-vinylique (EVOH), et au moins quatre couches de polyéthylène (PE) ou de polypropylène (PP) qui encapsulent lesdites au moins quatre couches d'EVOH, dans lequel le film comprend au moins 5 % en poids d'EVOH, en fonction du poids total du film, dans lequel le film barrière polymère multicouche a un taux de transmission d'oxygène (OTR) d'au plus 0,5 cc/m²/24h, tel que déterminé selon ASTM D3985 et dans lequel le film barrière polymère multicouche a un taux de transmission de vapeur d'eau (WVTR) d'au plus 3,8 g/m2/24h, tel que déterminé selon ASTM E398, dans lequel le film barrière multicouche comprend de 45 à 65 % en poids de PE et/ou de PP, de 20 à 40 % en poids de polymères adhésifs, et de 7,5 à 20 % en poids d'EVOH, en fonction du poids total du film, et dans lequel le film barrière polymère multicouche comprend en outre au moins six couches de polymères adhésifs choisis dans le groupe constitué par polymères PE à greffe anhydride maléique (MAH), éthylène-acide acrylique (EAA), acide éthylène-méthacrylique (EMAA), EMA (méthacrylate d'éthyle), éthylène-acétate de vinyle (EVA), ou mélanges de ceux-ci avec LLDPE, de préférence des polymères PE à greffe anhydride maléique (MAH), plus préférablement du LLDPE à greffe anhydride maléique (MAH), permettant de fournir une adhésion entre les au moins quatre couches internes d'EVOH et au moins quatre couches de PP ou de PE qui encapsulent lesdites couches d'EVOH, et dans lequel le film barrière ne comprend pas de métal ni de composés inorganiques.

2. Film barrière polymère multicouche selon la revendication 1, dans lequel les au moins quatre couches qui encapsulent lesdites couches d'EVOH sont en polyéthylène haute densité (HDPE) et/ou en polyéthylène linéaire basse densité (LLDPE).

3. Film barrière polymère multicouche selon la revendication 1 ou 2, dans lequel le film barrière a une épaisseur totale de 15 à 200 µm, de préférence 40 à 125 µm, plus préférablement 50 à 100 µm.

4. Stratifié barrière polymère constitué d'une couche de HDPE ou de PP orientée dans la direction machine qui est stratifiée à un film barrière polymère multicouche selon l'une quelconque des revendications 1 à 3.

5. Stratifié barrière polymère constitué d'un film barrière polymère multicouche selon l'une quelconque des revendications 1 à 3, dans lequel ledit film barrière polymère multicouche a été orienté dans la direction machine et est stratifié à un film de PE ou de PP.

6. Procédé permettant de produire un film barrière recyclable constitué d'un film barrière polymère multicouche selon l'une quelconque des revendications 1 à 5, dans lequel le procédé comprend les étapes consistant à,
a) faire fondre des polymères de polypropylène (PP) et/ou de polyéthylène (PE) et d'alcool éthylène-vinylique (EVOH) pour obtenir une masse fondue polymère homogène par polymère,
b) coextruder et joindre les multiples films polymères pour former une structure de film barrière unique avec de multiples couches de la masse fondue polymère fournissant un film barrière multicouche recyclable, dans lequel le film barrière multicouche recyclable est constitué d'au moins quatre couches internes d'alcool éthylène-vinylique (EVOH), et d'au moins quatre couches de polyéthylène (PE) ou de polypropylène (PP) encapsulant lesdites couches d'EVOH, et au moins six couches de polymères adhésifs, de préférence des polymères PE à greffe anhydride maléique (MAH), plus préférablement du LLDPE à greffe anhydride maléique (MAH), fournissant une adhésion entre les au moins quatre couches internes d'EVOH et au moins quatre couches de PE ou de PP qui encapsulent lesdites couches d'EVOH,
c) refroidir le film barrière recyclable à l'air en dessous de 100 °C.

7. Procédé permettant de produire un film barrière recyclable selon la revendication 6, dans lequel le film barrière multicouche comprend 45 à 65 % en poids, de préférence 50 à 60 % en poids de PE et/ou de PP, 20 à 40 % en poids, plus préférablement 25 à 35 % en poids de polymères adhésifs, et 7,5 à 20 % en poids, plus préférablement 10 à 15 % en poids d'EVOH, en fonction du poids total du film.

8. Procédé permettant de produire un film barrière recyclable selon la revendication 6 ou 7, dans lequel après coextrusion et jonction des multiples films polymères pour former une structure de film barrière unique ledit film barrière polymère multicouche est orienté dans la direction machine.

9. Procédé permettant de produire un film barrière recyclable selon l'une quelconque des revendications 6 à 8, dans lequel la fusion est mise en œuvre à 160 à 240 °C, de préférence 180 à 220 °C, le plus préférablement 195 à 205 °C, et/ou dans lequel la fusion est mise en œuvre à une pression de 200 à 500 bar, de préférence 250 à 400 bar, plus préférablement 300 à 350 bar.

10. Film barrière d'emballage alimentaire constitué du film barrière polymère multicouche ou du stratifié barrière polymère selon l'une quelconque des revendications 1 à 5.

11. Utilisation du film barrière polymère multicouche ou du stratifié barrière polymère selon l'une quelconque des revendications 1 à 5 pour l'emballage de produit alimentaire, de médicament ou de cosmétique.
